Europäisches Patentamt

European Patent Office

Office européen des brevets

(11) Veröffentlichungsnummer: **0 278 024 B1**

(12) # EUROPÄISCHE PATENTSCHRIFT

(45) Veröffentlichungstag der Patentschrift: **03.07.91**

(51) Int. Cl.⁵: **G09B 19/00**

(21) Anmeldenummer: **87101762.0**

(22) Anmeldetag: **09.02.87**

(54) **Verfahren und Vorrichtung zum objektiven Ermitteln, bzw. quantitativen Messen des Interessenniveaus von Testpersonen an vorgelegtem Bildmaterial und dessen Teilen.**

(43) Veröffentlichungstag der Anmeldung:
**17.08.88 Patentblatt 88/33**

(45) Bekanntmachung des Hinweises auf die Patenterteilung:
**03.07.91 Patentblatt 91/27**

(84) Benannte Vertragsstaaten:
**DE FR GB**

(56) Entgegenhaltungen:
**CH-A- 130 039**
**FR-A- 2 448 757**

**MEDICAL & BIOLOGICAL ENGINEERING & COMPUTING, Band 22, Nr. 4, Juli 1984, Seiten 353-360, IFMBE, Stevenage, Herts, GB; J.P.J. DE VALK et al.: "Analysis of eye fixations during the diagnostic interpretation of chest radiographs"**

**ELEKTOR, Band 3, Nr. 10, Oktober 1977, Elektor Publishers Ltd., GB; "Subliminal perception tester"**

(73) Patentinhaber: **ASK Gesellschaft für Sozial- und Konsumforschung Dr. H. Driessen mbH**
**Mönckebergstrasse 10**
**W-2000 Hamburg 1(DE)**

(72) Erfinder: **Driessen, H Dr.**
**Mönckebergstrasse 10**
**W-2000 Hamburg 1(DE)**
Erfinder: **Borgmann, Bernd. Dipl.-Phys.**
**Mönckebergstrasse 10**
**W-2000 Hamburg 1(DE)**
Erfinder: **Löffler, Gerd Dipl.-Phys.**
**Eckener Strasse 3**
**W-2000 Hamburg 70(DE)**

(74) Vertreter: **Fleck, Thomas, Dr.Dipl.-Chem. et al Patentanwälte Raffay, Fleck & Partner Postfach 32 32 17**
**W-2000 Hamburg 13(DE)**

**Beschreibung**

Die vorliegende Erfindung betrifft ein Verfahren zum objektiven Ermitteln bzw. quantitativen Messen des Interessenniveaus von Testpersonen an vorgelegtem Bildmaterial und dessen Teilen, sowie eine Vorrichtung zur Durchführung dieses Verfahrens. Insbesondere läßt sich dieses Verfahren bei der Werbewirksamkeitsforschung über Werbematerialien wie Anzeigen, Abbildungen von Packungen und dergleichen anwenden. Es versteht sich jedoch, daß das Verfahren und die Vorrichtung hierauf nicht beschränkt sind, sondern sich auch im Bereich der Medizin (Neurologie und Psychologie) sowie im breiten Bereich der Erforschung der Arbeitswelt anwenden läßt.

Im Stand der Technik sind verschiedene Verfahren und Vorrichtungen bekannt, die entweder aufgrund ihrer Einfachheit nur sehr unzureichende Aussagen über die Wahrnehmungen von Testpersonen zulassen, oder trotz ihrer Aufwendigkeit noch einen hohen Grad subjektiver Auswertungskriterien enthalten. Das Tachistoskop ermöglicht es z.B., einer Testperson Bilder bzw. Dias nur für eine extrem kurze Zeitspanne zu zeigen, die dann nachfolgend gesteigert wird, um so das Entstehen gewisser Wahrnehmungen zu analysieren. Dieses Verfahren beabsichtigt deutlich zu machen, wo Ursachen für unzureichende oder fehlerhafte Wahrnehmungen liegen. Im Marketingbereich kann man so die Wirkung von Anzeigen, Plakaten, Schaufenstergestaltungen, Inseraten, Prospekten, Verpackungsgestaltungen, Produktwahrnehmungen innerhalb eines Angebotssortiments durch Befragung von Testpersonen analysieren. Der subjektive Charakter dieses Verfahrens steht hier stark im Vordergrund.

Der vorliegenden Erfindung liegt deshalb die Aufgabe zugrunde, die bekannten, mehr oder wenig subjektiven Verfahren derart zu verbessern, daß man von einer objektiven Ermittlung bzw. quantitativem Messen des Interessenniveaus von Testpersonen an vorgelegtem Bildmaterial und dessen Teilen sprechen kann. Es soll also eine neue Qualität der Ergebnisermittlung und somit der Ergebnisse selbst erreicht werden, die eine ausgezeichnete Einschätzung analoger Realverhältnisse ermöglicht. Ziel der Erfindung ist es also, ein Verfahren und eine Vorrichtung zur Durchführung des Verfahrens zu schaffen, mit denen Erkenntnisse gewonnen werden können, die der Überprüfung theoretischer Annahmen der Wahrnehmungspsychologie durch Dokumentierung tatsächlicher Wahrnehmungsvorgänge an realen Objekten dienen.
Diese Aufgabe bzw. das Ziel werden durch das im Anspruch 1 gekennzeichnete Verfahren bzw. durch die im Anspruch 10 näher gekennzeichnete Vorrichtung gelöst.

An sich ist aus dem Artikel MEDICAL & BIOLOGICAL ENIGINEERING & COMPUTING, Band 22, Nr. 4, Juli 1984, Seiten 353-360, IFMBE, Stevenage, Herts, GB; J.P.J. DE VALK et al.: "Analysis of eye fixations during the diagnostic interpretation of chest radiographs" bekannt, Augenbewegungen für ähnliche Zwecke aufzunehmen und auszuwerten. Die erforderliche Apparatur ist kompliziert und für die Testperson unbequem zu benützen.

Das erfindungsgemäße Verfahren erlaubt also nicht nur kurzzeitige Darbietungen, wie die vorhandenen elektrischen Tachistoskope, sondern eine tatsächliche quantitative Messung dessen, was die Testperson bzw. den Betrachter im einzelnen interessiert, was er sich am Bildmaterial angesehen hat und welche Teile bzw. Elemente davon für sie bzw. für ihn von Interesse sind und welche nicht, so daß dieses dann zu der hinter der Gestaltung stehenden Konzeption in Verbindung gesetzt werden kann. Das erfindungsgemässe Verfahren liefert folgende Ergebnisse:
es lassen sich Rückschlüsse ziehen auf das Interesse, das Verständnis und die Aufmerksamkeit von Testpersonen, so daß nach erfolgter Auswertung ggf. Korrekturen an der real zu schaltenden Anzeige bzw. dem tatsächlich aufgestellten Plakat vorgenommen werden können, um eine noch höhere und bessere Aufmerksamkeit und Erkennbarkeit für das gewünschte Detail bzw. eine bestimmte Bildfläche oder Motiv zu erreichen. Erfindungsgemäß schafft man also eine Situation, in der Bildmaterial, wie Anzeigen und dergleichen, als Testobjekt einer Testperson in einer exakt festgelegten Zeit dargeboten wird, so daß sie die Bildinformation "wahrnehmen" kann, d.h. das Bildmaterial wird extrem kurzfristig ausgeleuchtet, so daß nur ein äußerst flüchtiger Eindruck hervorgerufen wird. Anschließend wird das Bildmaterial derart abgedunkelt, daß die Testperson dem vorgelegten Bild keine weitere Information mehr entnehmen kann. Nunmehr wird erfindungsgemäß dieser Testperson mit Hilfe einer beweglichen Lichtquelle bzw. Beleuchtungsvorrichtung die Möglichkeit gegeben, einen Lichtkegel zu erzeugen, um solche Teile bzw. Teilaspekte des vorgelegten Bildes auszuleuchten, die sie "interessieren". Auf diese Art und Weise wird es möglich, das individuelle Interesse bzw. Interessenniveau physikalisch zu erfassen und somit zu quantifizieren. Die Zeit zum verbesserten Ausleuchten gewünschter partieller Bildflächen ist dabei so kurz bemessen, daß die Testperson nur die für sie wichtigen Koordinatenpunkte mit prominentem Inhalt anleuchten kann. Die Testperson führt hier mit verlangsamter Geschwindigkeit gegenüber dem sehr schnellen, flüchtigen Auge, also genau das aus, was auch sonst beim "normalen" Betrachten einer Anzeige oder eines Plakates geschieht. Gleichzeitig zu diesem Vorgang erfolgt hierzu die digitale Erfassung einer Vielzahl von Koordinaten der projizierten Lichtkegelflächen und ihrer Aufenthaltsdauer durch ein lichtempfindliches Abtastgerät bzw. eine dafür geeignete Kamera. Die digitalisierten Koordinaten- und Zeitdaten werden in einem Computer mit Interface gespeichert und können je nach Auswahlkriterien selektiert werden. Dieser Computer bzw. Rechner kann die gespeicherte Information pro einzelnem Betrachter als auch über alle Betrachter bzw. Testpersonen einer Anzeige zahlenmäßig und grafisch ausgeben, wodurch Beobachtungsschwerpunkte, der Blickverlauf zwischen diesen und die Aufenthaltsdauer in den Beobachtungsschwerpunkten wiedergegeben werden kann. Durch die erfindungsgemäße Registrierung des von der Testperson geführten Lichtkegels wird also die Wirkung visueller Objekte quantitativ messbar, wie die Informationsaufnahme durch die Testperson objektiv deutlich macht, ohne daß Mängel in Kauf genommen werden müssen, die durch subjektive, anschließende Fragestellungen auftreten, die auch das Erinnerungsvermögen der Testpersonen als kritischen Faktor mit einschließen.

Weitere Vorteile und Merkmale des erfindungsgemäßen Verfahrens sind in den Unteransprüchen beschrieben, die sich auf besonders vorteilhafte Maße, insbesondere Zeit- und oder Längenangaben beziehen.

Das erfindungsgemäße Verfahren und Vorrichtung zeigt, daß auf der Basis der exakt erhobenen Daten jede direkte oder indirekte Einflußnahme durch Versuchsleiter oder auswertende Personen ausgeschlossen ist, so daß die statistische Auswertung erfindungsgemäß als objektiv unbeeinflusst gelten kann. Es dürfte einleuchten, daß anhand der ermittelten und gespeicherten digitalen Daten der Statistiker bzw. Informatiker als Fachmann ohne weiteres dieses Datenmaterial be- und verarbeiten können, um bestimmte spezifische Aussagen zu erzielen.

Im folgenden wird ein bevorzugtes Ausführungsbeispiel der vorliegenden Erfindung anhand der Zeichnung näher erläutert.

Es zeigt:

Fig. 1    eine schematische Ansicht der erfindungsgemäßen Vorrichtung zur Durchführung des erfindungsgemäßen Verfahrens; und

Fig. 2    eine grafische Darstellung der Beobachtungsschwerpunkte eines Bildes durch eine Vielzahl von Testpersonen.

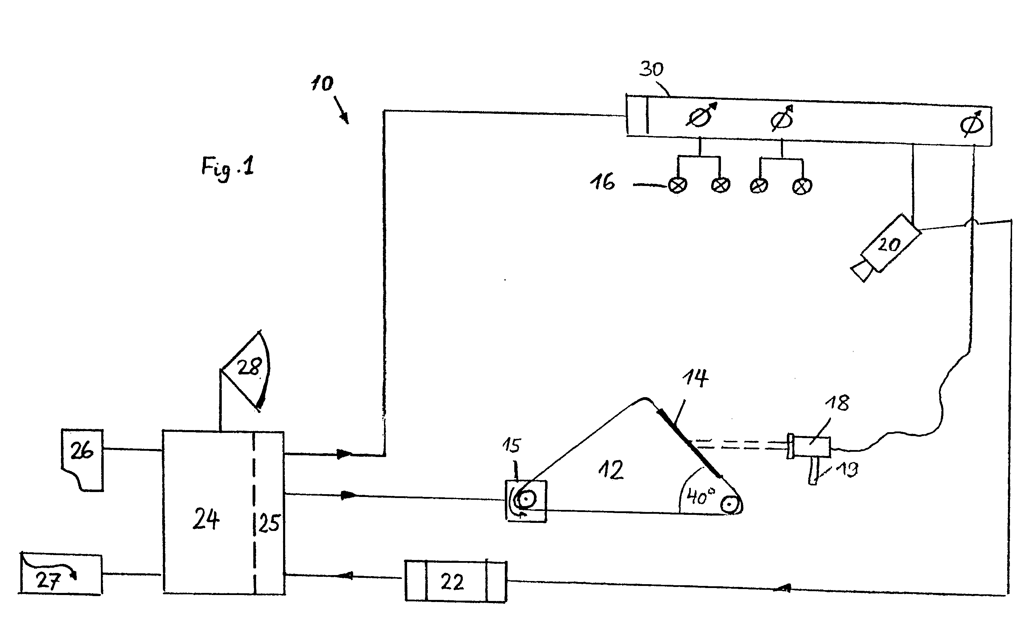

In Fig. 1 ist die Anlage bzw. Vorrichtung zur Durchführung des erfindungsgemäßen Verfahrens allgemein mit 10 bezeichnet. Sie besteht aus einer Vorrichtung 12 zum Halten und Positionieren von Bildmaterial 14, das in einer Ebene senkrecht zur Achse des Abtastgerätes/der Kamera 18 vor einer nicht gezeigten Testperson in Intervallsteuerung mittels eines Motors 15 auf einem Endlosförderer umläuft. Das Bildmaterial 14 umfaßt im vorliegenden Fall einen sog. Testblock von zwölf Anzeigen, bei dem an bestimmter Stelle die Testanzeige enthalten ist. Dieser Testblock wird jeder Testperson im einzelnen absolut identisch vorgeführt. Das ermöglicht nicht nur eine exakte Erfassung dessen, was die Testpersonen gesehen haben, sondern auch, wie sich das Sehen und Betrachten einer Anzeige von der anderen oder den übrigen unterscheidet. Die Anzahl der im Testblock aufeinanderfolgenden Anzeigen ist in keiner Weise kritisch, sondern kann im beliebigen Rahmen gewählt werden. Ebenfalls können gleichzeitig mehrere Testanzeigen auf ihre Werbewirksamkeit innerhalb einer Serie untersucht werden. Vorteilhafterweise handelt es sich bei den Anzeigen des Bildmaterials 14 um übliche Zeitschriftenformate. Größere und kleinere Formate sind jedoch ebenfalls denkbar, beispielsweise bei der Erforschung der Werbewirksamkeit von Packungen oder Plakaten. Die auf die Anzeige fallende Lichtmenge wird dabei zur kurzfristigen Ausleuchtung durch die Beleuchtungsvorrichtungen 16 so reguliert, daß der Betrachter die Anzeige nur sehr unvollkommen, aber - zur groben Orientierung - in seiner Gesamtheit wahrnimmt. Als besonders geeignet hat sich hier die kurzfristige Ausleuchtung über einen Zeitraum von 0,25 Sekunden erwiesen. Im Anschluß an diese "Wahrnehmung" wird das Bildmaterial 14 bzw. die Anzeige mittels der Beleuchtungsvorrichtung 16 derart abgedunkelt, daß die dosierte Lichtstärke für die Testperson zur weiteren Aufnahme der Bildinformation nicht mehr ausreicht. Die Testperson kann dann jedoch manuell mit Hilfe einer beweglichen Beleuchtungsvorrichtung 18, insbesondere eines Lichtstrahls, innerhalb der vorgegebenen festen Intervallzeit pro Bild von ca.5 -7 Sekunden gewünschte, partielle Bildfläche der Anzeige verbessert ausleuchten, also die Information betrachten, die sie interessiert hat oder auch auffinden muß, um die Bildinformation überhaupt als Ganzes inhaltlich zu verstehen. Der Durchmesser des Lichtkegels hat sich bei Anzeigen zu etwa 3 cm als günstig erwiesen. Zur besseren Handhabung weist die Beleuchtungsvorrichtung 18 einen Handgriff 19 auf. Sowohl die Beleuchtungsvorrichtung 16 als auch 18 sind über entsprechende Leitungen mit einer Relaissteuerung 30 zur Regelung der Beleuchtung und ihrer Stärke verbunden. Die Relaissteuerung 30 und auch der Motor 15 sind über die Schnittstelle 25 mit dem Computer 24 verbunden, der den gesamten Verfahrensablauf steuert. Das Anzeigenbild mit dem darauf sich - entsprechend dem Auge- bewegenden Lichtpunkt wird durch eine mit der Relaissteuerung 30 und dem Computer 24 verbundene Kamera/lichtempfindliches Abtastgerät 20 aufgenommen. Die Kamera 20 weist eine Digitalisiervorrichtung 22 auf oder ist mit einer solchen verbunden, um die digitale Erfassung einer Vielzahl von Koordinaten der projizierten Lichtkegelflächen und ihrer Aufenthaltsdauer sowie den Weg zwischen den betrachteten Punkten aufzunehmen. Die Kamera (20) ist handelsüblich und kann beispielsweise der Marke Bosch sein.

Die Digitalisiervorrichtung (22) kann auch Bestandteil des Computers (24) sein.

Die Digitalisiervorrichtung setzt die Videosignale der Kamera in digitale um und prüft den Pegel. Sie stellt fest, wieviel Lichtpunkte pro Abtastvorgang registriert werden.

Handelsüblich ist auch der Computer 24 mit Schnittstelle 25 mit daran angeschlossenem Bildschirm 28 sowie den Druckern 26 und 27, bei denen es sich um Geräte der Firmen Compaq, Philips, Star, Sekonic handelt. Die statistische Auswertung der gespeicherten und selektierten Daten kann dann durch zahlenmäßiges und/oder grafisches Ausdrucken oder durch Wiedergabe auf dem Bildschirm 28 erfolgen, wobei Beobachtungsschwerpunkte, der Blickverlauf zwischen diesen und die Aufenthaltsdauer in den Beobachtungsschwerpunkten ermittelt werden. Der Rechner 24 kann diese Information pro Testperson als auch über alle Testpersonen einer Anzeige zahlenmäßig und/oder grafisch ausgeben.

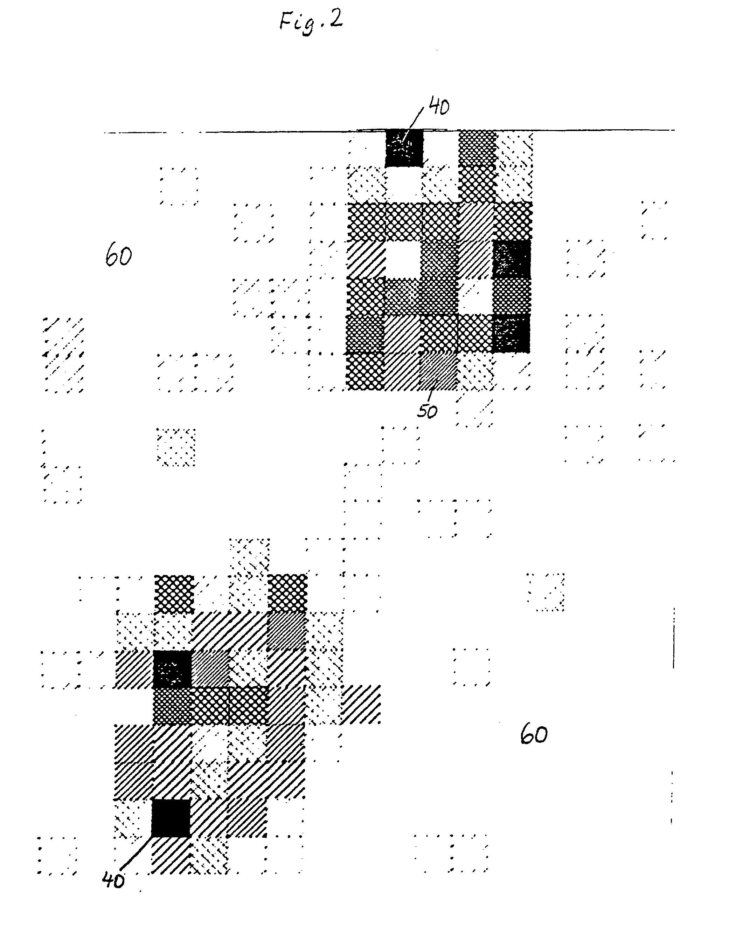

In Fig. 2 sind z.B. solche Beobachtungsschwerpunkte von 27 Testpersonen für ein Anzeigenbild dargestellt, wobei die stark schraffierten Quadrate 40 die eigentlichen Schwerpunkte darstellen, während die schwächer schraffierten Quadrate 50 von geringerem Interesse bei den Testpersonen sind und die weißen Flächen 60 nicht ausgeleuchtet wurden und somit von den Testpersonen als nicht aufmerksamkeitserregend empfunden wurden. Diese objektive grafische Auswertung zeigt also im oberen rechten Bereich und im linken unteren Bereich der Anzeige fünf Beobachtungsschwerpunkte 40 sowie im Umfeld darum auch noch solche Quadranten mit Interesse, das jedoch etwas geringer ist (50), während in der linken oberen und rechten unteren Bildhälfte die praktisch weißen Flächen 60 andeuten, daß hier die Vielzahl der Testpersonen uninteressante Text-und/oder Motivangaben gesehen und empfunden haben. Es versteht sich, daß der Computerfachmann ohne weiteres durch Modifizierung der gespeicherten Parameter die Größe der Quadranten und ihre Anzahl verändern kann, um zu groben, übersichtlicheren einerseits und detaillierten Darstellungen andererseits zu gelangen. Auch ist es denkbar, daß die Quadranten in Kreisform abgebildet werden. Der Durchmesser der Kreise bzw. die Kantenläge der Quadranten kann in Abhängigkeit von der Koordinatendichte gewählt werden. Dabei können bestimmte Werte vorgegeben werden, bis zu welcher Dichte die Beobachtungen noch erfaßt werden sollen.

Im übrigen bereitet die Darstellung des Blickverlaufs einzelner, mehrerer oder aller Testpersonen kein Problem. Fixpunkte stellen die Beobachtungsschwerpunkte dar, wobei die Reihenfolge festgestellt wird, in welcher die Testpersonen diese Schwerpunkte angeschaut haben. Hieraus kann ohne weiteres eine Häufigkeitsverteilung pro Schwerpunkt dargestellt werden. Das Maximum dieser Verteilung sagt dann aus, an welcher Stelle im zeitlichen Ablauf dieser Schwerpunkt beobachtet wurde. Jedem Schwerpunkt kann dann eine Ziffer zugeordnet werden, so daß dann die chronologische, grafische Verknüpfung dieser Schwerpunkte einen repräsentativen Blickverlauf für alle Testpersonen ergibt. Ferner dürfte es einleuchten, daß auch die Aufenthaltsdauer in den Beobachtungsschwerpunkten anhand der ermittelten Zeitangaben sich für die einzelnen Testpersonen getrennt oder auch für alle gemeinsam zahlenmäßig und/oder grafisch darstellen läßt.

## Ansprüche

1. Verfahren zum objektiven Ermitteln bzw. quantitativen Messen des Interessenniveaus von Testpersonen an vorgelegtem Bildmaterial und dessen Teilen, insbesondere bei der Werbewirksamkeitsforschung über Werbematerial wie Anzeigen, Abbildungen von Packungen und dergleichen, gekennzeichnet durch folgende Stufen:

   a) Vorsehen einer Vorrichtung (12) zum Halten und Positionieren von Bildmaterial (14) und dergleichen, sowie Transportieren desselben mit steuerbarer Geschwindigkeit (15);

   b) Einnahme der Beobachtungsposition durch die Testpersonen nacheinander vor der Vorrichtung (12) in normalen Leseabstand, ohne das Bildmaterial (14) zu erkennen;

   c) kurzfristige Ausleuchtung des Bildmaterials (14) mittels einer Beleuchtungsvorrichtung (16) zum visuellen Wahrnehmen der Bildinformation;

   d) Abdunkeln des Bildmaterials (14) mittels der Beleuchtungsvorrichtung (16) derart, daß die dosierte Lichtstärke für die Testperson zur weiteren Aufnahme der Bildinformation nicht mehr ausreicht;

   e) Einsatz einer beweglichen, dosierten Beleuchtungsvorrichtung (18), zum Erzeugen eines Lichtkegels durch die Testperson zum verbesserten Ausleuchten gewünschter, partieller Bildflächen innerhalb vorgegebener Zeit;

   f) Vorsehen eines lichtempfindlichen Abtastgerätes (20,22) zur digitalen Erfassung einer Vielzahl von Koordinaten des projizierten Lichtstrahles und seiner Aufenthaltsdauer;

g) Selektion und Speicherung der digitalisierten Koordinaten-und Zeit-Daten einer Vielzahl von Testpersonen in einem Computer (24) mit Interface/Schnittstelle (25);

h) statistische Auswertung der gespeicherten Daten durch zahlenmäßiges und/oder grafisches Ausdrucken auf einen entsprechenden Drucker (26 bzw. 27) unter Feststellung der Beobachtungsschwerpunkte, des Blickverlaufs zwischen diesen und der Aufenthaltsdauer in den Beobachtungsschwerpunkten des Bildmaterials (14) und/oder Wiedergabe auf einem Bildschirm (28).

2. Verfahren nach Anspruch 1, dadurch gekennzeichnet, daß die kurzfristige Ausleuchtung der Stufe c) etwa 0,2 -0,3 s, insbesondere 0,25 s beträgt, und das Bildmaterial (14) in endloser Form eine Vielzahl einzelner Bilder bzw. Motive umfaßt, die in regulierbaren zeitlichen Intervallen transportiert werden und der Testperson pro Bild 2 - 20 Sekunden, insbesondere 5 - 7 Sekunden, im Stand zur Betrachtung durch Ausleuchtung (Stufe e) zur Verfügung stehen.

3. Verfahren nach Anspruch 1, dadurch gekennzeichnet, daß der Testperson zwischen Stufe b) und c) ein Informationsblatt über den Verfahrensablauf und die von ihr durchzuführenden Tätigkeiten erkennbar dargeboten wird.

4. Verfahren nach Anspruch 1, dadurch gekennzeichnet, daß der in Stufe e) erzeugte Lichtstrahl etwa einen Durchmesser von 2 bis 4 cm, insbesondere 3 cm, aufweist, wobei die einzelnen Bilder des Bildmaterials Zeitschriftenformat besitzen und der Leseabstand etwa 30 bis 60 cm, insbesondere 40 cm, bei ca. 45° Lesehaltung beträgt.

5. Verfahren nach Anspruch 1, dadurch gekennzeichnet, daß die Selektion der Stufe g) nach verschiedenen Kriterien erfolgt, insbesondere nach der Koordinatenpunktdichte, sowie der Verweildauer in den Quadranten und der von einem zum anderen Koordinatenpunkt benötigten Zeit.

6. Verfahren nach Anspruch 1, dadurch gekennzeichnet, daß der Computer bzw. Rechner den gesamten Verfahrensablauf des Tests steuert, insbesondere Vorlagezeit des jeweiligen Bildes, die verschiedenen Beleuchtungssituationen, das Abtastgerät etc..

7. Verfahren nach einem der vorstehenden Ansprüche, dadurch gekennzeichnet, daß das Bildmaterial (14) einen Endlos-Testblock mit 8 - 12 Anzeigen (Bildern) umfaßt.

8. Verfahren nach einem der vorstehenden Ansprüche, 1 bis 7, dadurch gekennzeichnet, daß die selektierten und gespeicherten Daten einzelner, mehrerer und/oder aller Testpersonen jeweils pro Bild überlagert dargestellt werden.

9. Verfahren nach einem der vorstehenden Ansprüche 1 bis 8, dadurch gekennzeichnet, daß durch Festlegen bestimmter Werte und Grenzen getrennte Aussagen und Darstellungen zu den Beobachtungsschwerpunkten, dem häufigsten Blickverlauf und der Aufenthaltsdauer gemacht werden.

10. Vorrichtung zur Durchführung des Verfahrens nach einem oder mehreren der vorstehenden Ansprüche 1 bis 9, gekennzeichnet durch folgende Hardware:

a) Vorrichtung (12) zum Halten und Positionieren von Bildmaterial (14) und dergleichen sowie Transportieren desselben auf einem Endlosförderer (15) in regulierbaren Intervallen, wobei das Bildmaterial (14) in etwa der Testperson in 45°-Lesehaltung dargeboten wird, und wobei diese Vorrichtung direkt mit einem Computer (24) über ein Interface (25) verbunden ist;

b) Raum- und Bildmaterial-Beleuchtungsvorrichtung (16), deren Lichtstärke dosierbar ist und die mit dem Computer (24) über das Interface (25) und eine Relaissteuerung (30) zur Beleuchtungsregelung verbunden ist;

c) bewegliche Beleuchtungsvorrichtung (18) zum Erzeugen eines Lichtkegels durch die Testperson zum verbesserten Ausleuchten gewünschter, partieller Bildflächen, die über die Relaissteuerung (30) und das Interface (25) mit dem Computer (24) verbunden ist;

d) lichtempfindliches Abtastgerät (20,22) bzw. Kamera mit digitaler Datenerfassungsvorrichtung zur Aufnahme einer Viezahl von Koordinaten der projizierten Lichtkegelflächen und ihrer Aufenthaltsdauer, wobei dieses Abtastgerät derart angeordnet ist, daß es einen ungehinderten Strahlengang zum jeweils betrachteten Bild des Bildmaterials (14) besitzt, und wobei das Abtastgerät über das Interface (25) mit dem Computer (24) verbunden ist, mit programmierter CPU-Einheit, Bildschirm (28) und zwei Druckern (26,27), der im Echtzeitverfahren die Beleuchtung ein- und ausschaltet bzw. regelt, den Bildtransport steuert und die Reaktion der Testpersonen durch digitale Erfassung der Koordinaten eines Lichtstrahles registriert und für eine spätere Auswertung zur Verfügung stellt.

**Claims**

1. Method for objectively determining or quantitatively measuring the level of interest of test subjects in displayed pictorial material and parts thereof, particularly in connection with advertising activity research concerning advertising and publicity material such as advertisements, pictures of packs, etc., characterized by the following stages:

a) provision of a device (12) for holding and positioning pictorial material (14) and the like, as well as conveying the same at a controllable speed (15);

b) assuming the observation person by the test subjects successively infront of the device (12) at the normal reading distance, but without distinguishing the pictorial material (14),

c) brief illumination of the pictorial material (14) by means of a lighting unit (16) for the visual perception of the pictorial information,

d) darkening the pictorial material (14) by means of the lighting unit (16) in such a way that the dosed light intensity is no longer sufficient for the test subject to further record the pictorial information,

e) use of a movable, dosed lighting unit (18) for producing a light cone through the test subject for the improved illumination of desired, partial picture areas within a predetermined time,

f) provision of a photosensitive scanner (20,22) for the digital determination of a plurality of coordinates of the projected light beam and its residence time,

g) selection and storage of the digitized coordinate and time data of a plurality of test subjects in a computer (24) with interface (25),

h) statistical evaluation of the stored data by numerical and/or graphic printout on a corresponding printer (26,27) whilst establishing the observation centres of interest, the viewing path between the latter and the residence time in the observation centres of interest of the pictorial material (14) and/or reproduction on a screen (28).

2. Method according to claim 1, characterized in that the brief illumination of stage c) is approximately 0.2 - 0.3 s, particularly 0.25 s and the pictorial material (14) in continuous form comprises a plurality of individual pictures or motifs, which are conveyed at regulatable time intervals and the test subject has per picture 2 to 20 and in particular 5 to 7 seconds for observation by illumination (stage e).

3. Method according to claim 1, characterized in that between stages b) and c) the test subject is presented with an information sheet over the process sequence and the activities to be performed.

4. Method according to claim 1, characterized in that the light beam produced in stage e) has a diameter of approximately 2 to 4 cm and in particular 3 cm, the individual pictures of the pictorial material having a magazine format and the reading distance is approximately 30 to 60 cm and in particular 40 cm with a reading angle of approximately 45°.

5. Method according to claim 1, characterized in that the selection of stage g) takes place according to different criteria, particularly according to the coordinate point density, as well as the residence time in the quadrant and the time required between the individual coordinate points.

6. Method according to claims 1 and 2, characterized in that the computer controls the entire process sequence of the test and in particular the display time of each picture, the different illumination situations, the scanner, etc.

7. Method according to one of the preceding claims, characterized in that the pictorial material (14) comprises a continuous test block with 8 to 12 advertisements (pictures).

8. Method according to one of the preceding claims 1 to 7, characterized in that the selected and stored data of individual, several and/or all test subjects are represented superimposed for each picture.

9. Method according to one of the preceding claims 1 to 8, characterized in that by establishing specific values and limits, it is possible to make seperate statements and diagrams regarding the observation centres of interest, the most frequent viewing path and the residence time.

10. Apparatus for performing the method according to one or more of the preceidng claims 1 to 9, characterized by the following hardware:

a) a device (12) for holding and positioning pictorial material (14) and the like, as well as for conveying the same on a continuous conveyor (15) at regulatable intervals, the pictorial material (14) being displayed to the test subject at a reading angle of roughly 45° and in which the said device is directly connected to a computer (24) across an interface (25),

b) a room and pictorial material lighting unit (16), whose light intensity can be dosed and which is connected to the computer (24) across the interface (25) and a relay control (30) for regulating the lighting,

c) a movable lighting unit (18) for producing the light cone through the test subject to improve the illumination of desired, partial picture surfaces, which is connected across the relay control (30) and the interface (25) to the computer (24),

d) A light sensitive scanner (20,22) or camera with a digital data acquisition unit for recording a plurality of coordinates of the projected light cone faces and the residence time thereof, the said scanner being positioned in such a way that it has an unhindered beam path to the particular observed picture of the pictorial material (14) and in which the scanner is connected across the interface (25) to the computer (24), with the programmed CPU, the screen (28) and two printers (26,27), which switches on or off or regulates the illumination in a real time process, controls the picture transport and records the reaction of the test subject by digital acquisition determination of the coordinates of a light beam and makes same available for a subsequent evaluation.

**Revendications**

1. Procédé pour respectivement la détermination objective et la mesure quantitative du niveau de l'intérêt des personnes test porté au matériel illustratif présenté et ses éléments, notamment pour la recherche de l'efficacité de la publicité concernant le matériel de publicité tel que annonces, reproductions d'emballages et autres choses de ce genre, caractérisé en ce que:

a) l'on prévoit un dispositif (12) destiné à tenir et positionner le matériel illustratif (14) et autres choses de ce genre ainsi qu'à transporter celui-ci avec une vitesse réglable (15);

b) les personnes test prennent la position d'observation l'une après l'autre devant le dispositif (12) à une distance de lecture normale sans reconnaître le matériel illustratif (14);

c) l'on illumine pour un court instant le matériel illustratif (14) au moyen d'un dispositif d'éclairage (16) pour la perception visuelle de l'information illustrée;

d) l'on obscurcit le matériel illustratif (14) à l'aide du dispositif d'éclairage (16) de manière à ce que l'intensité lumineuse dosée ne suffise plus à la perception de l'information illustrée;

e) l'on met en oeuvre un dispositif d'éclairage mobile dosé (18) destiné à engendrer un cône de lumière par la personne test pour un meilleur éclairage des surfaces d'images partielles désirées en un temps donné;

f) l'on prévoit un balayeur photosensible (20,22) pour l'enregistrement numérique d'un grand nombre de coordonnées du rayon lumineux projeté et de son temps d'arrêt;

g) l'on selectionne et mémorise les données de coordonnées et de temps numérisées d'une mulitude de personnes test dans un ordinateur (24) avec interface (25);

h) l'on exploite statistiquement les données mémorisées au moyen d'une impression numérique et/ou graphique sur une imprimante appropriée (resp. 26 et 27) en déterminant les points principaux d'observation, le cours suivi par le regard entre ceux-ci et le temps de d'arrêt sur les points principaux d'observation du matériel illustratif (14) et/ou représentation sur un écran (28).

2. Procédé selon la revendication 1, caractérisé en ce que l'éclairage momentané de l'étape c) est de 0,2 à 0,3 s environ, en particulier de 0,25 s, et que le matériel illustratif (14) en continu comprend une multitude d'images ou de motifs individuels qui sont transportés dans des intervalles de temps réglables et qui, par l'éclairage (étape e), sont à la disposition de la personne test pendant 2 à 20 s, en particulier pendant 5 à 7 5 pour chaque image.

3. Procédé selon la revendication 1, caractérisé en ce que l'on présente à la personne test entre les étapes b) et c) de façon reconnaissable une fiche d'information relatif au déroulement du procédé et aux opérations devant être effectuées par cette personne.

4. Procédé selon la revendication 1, caractérisé en ce que le rayon lumineux engendré dans l'étape e) présente un diamètre de 2 à 4 cm, en particulier de 3 cm, les images individuelles du matériel illustratif ayant un format d'une revue courante et la distance de lecture étant de 30 à 60 cm, en particulier de 40 cm pour une position de lecture de 45°.

5. Procédé selon la revendication 1, caractérisé en ce que la selection de l'étape g) s'effectue selon des critères différents, en particulier selon la densité de points de coordonnées ainsi que le temps d'arrêt dans les quadrants et le temps nécessaire pour aller d'un point de coordonnées à l'autre.

6. Procédé selon la revendication 1 et 2, caractérisé en ce que l'ordinateur ou le calculateur commande l'ensemble des opérations du prodédé du test, en particulier la durée de présentation de chaque image, les différentes situations d'illumination, le balayeur etc.

7. Procédé selon l'une quelconque des revendications 1 à 7, caractérisé en ce que le matériel illustratif (14) comprend un bloc de test sans fin avec 8 à 12 présentations (images).

8. Procédé selon l'une quelconque des revendications 1 à 7, caractérisé en ce que les données selectionnées et mémorisées de chaque, plusieurs et/ou toutes les personnes test sont présentées de façon superposée pour chaque image.

9. Procédé selon l'une quelconque des revendications 1 à 7, caractérisé en ce que l'on a des informations et présentations séparées relatives aux points principaux d'observation, au cours suivi par le regard le plus fréquent et à la durée d'arrêt en déterminant des valeurs et limites données.

10. Dispositif pour la mise en oeuvre du procédé selon l'une quelconque ou plusieurs des revendications 1 à 9, caractérisé par le hardware suivant:

a) dispositif (12) destiné à tenir et positionner le matériel illustratif (14) et autres choses de ce genre ainsi qu'à transporter celui-ci sur un transporteur sans fin (15) dans des intervalles réglables, le matériel illustratif (14) étant présenté à la personne test à une position de lecture de 45° environ et ce dispositif étant directement lié à un ordinateur (24) par un interface (25);

b) dispositif d'éclairage de local et de matériel illustratif (16) dont l'intensité lumineuse est dosable et qui, pour le réglage de l'éclairage, est lié avec l'ordinateur (24) par l'interface (25) et une commande par relais (30);

c) dispositif d'éclairage mobile (18) destiné à engendrer un cône lumineux par la personne test pour un meilleur éclairage des surfaces d'images partielles désirées, lié avec l'ordinateur (24) par la commande de relais (30) et l'interface (25);

d) balayeur photosensible (20, 22) ou appareil photographique avec dispositif d'enregistrement de données numérique destiné à la prise d'une multitude de coordonnées des surfaces de cônes lumineux projetées et leur temps d'arrêt, ce balayeur étant disposé de manière à ce qu'il possède une marche de rayons libre à chaque image regardée du matériel illustratif (14) et ce balayeur étant lié par l'interface (25) avec l'ordinateur (24), avec une unité centrale programmée, un écran (28) et deux imprimantes (26,27), et qui en un système fonctionnant en temps réel allume et éteint ou règle l'éclairage, commande le transport d'images et enregistre la réaction des personnes test par un enregistrement numérique des coordonnées d'un rayon lumineux pour les mettre à la disposition pour une exploitation ultérieure.

Fig.1

EP 0 278 024 B1

Fig. 2